(19) Europäisches Patentamt / European Patent Office / Office européen des brevets

(11) **EP 3 047 298 B1**

(12) **FASCICULE DE BREVET EUROPEEN**

(45) Date de publication et mention de la délivrance du brevet:
**09.08.2017 Bulletin 2017/32**

(21) Numéro de dépôt: **14767009.5**

(22) Date de dépôt: **18.09.2014**

(51) Int Cl.:
*G01S 13/87* *(2006.01)*     *G01S 13/02* *(2006.01)*

(86) Numéro de dépôt international:
**PCT/EP2014/069912**

(87) Numéro de publication internationale:
**WO 2015/040121 (26.03.2015 Gazette 2015/12)**

(54) **PROCÉDÉ DE DÉTECTION DE CIBLES ET RADAR MULTIFONCTION ASSOCIÉ**

VERFAHREN ZUR DETEKTION VON ZIELEN UND ZUGEHÖRIGER MULTIFUNKTIONSRADAR

METHOD FOR DETECTING TARGETS AND ASSOCIATED MULTIFUNCTION RADAR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.09.2013 FR 1302186**

(43) Date de publication de la demande:
**27.07.2016 Bulletin 2016/30**

(73) Titulaire: **Thales**
**92400 Courbevoie (FR)**

(72) Inventeurs:
• **ENDERLI, Cyrille**
**F-78852 Elancourt Cedex (FR)**
• **DELABBAYE, Jean-Yves**
**F-78125 Vieille Eglise en Yvelines (FR)**

(74) Mandataire: **Brunelli, Gérald et al**
**Marks & Clerk France**
**Immeuble Visium**
**22, avenue Aristide Briand**
**94117 Arcueil Cedex (FR)**

(56) Documents cités:
**EP-A1- 2 453 251     US-A1- 2004 263 378**

• **J-L MILIN ET AL: "AMSAR - A European success story in AESA radar", IEEE AEROSPACE AND ELECTRONIC SYSTEMS MAGAZINE, IEEE SERVICE CENTER, PISCATAWAY, NJ, US, vol. 25, no. 2, 1 février 2010 (2010-02-01), pages 21-28, XP011306683, ISSN: 0885-8985 cité dans la demande**
• **LE CHAVALIER F: "Space-Time Transmission and Coding for Airborne Radars", LEIDA-KEXUE-YU-JISHU = RADAR SCIENCE AND TECHNOLOGY,, vol. 6, no. 6, 1 décembre 2008 (2008-12-01), pages 411-421, XP009130674, ISSN: 1672-2337 cité dans la demande**

EP 3 047 298 B1

**Description**

La présente invention concerne le domaine général des radars notamment celui des radars aéroportés. La présente invention concerne plus particulièrement un procédé de détection de cible aérienne et un radar multifonction associé.

Un problème dans le domaine des radars aéroportés est la réalisation de plusieurs fonctions radar simultanées nécessitant la mise en oeuvre de formes d'onde différentes avec une seule et même antenne. Parmi ces fonctions radar, on peut citer par exemple la détection air/air, la détection air/sol et l'imagerie au sol.

Pendant la réalisation d'une fonction air/sol, comme par exemple une détection de cibles mobiles au sol (ou GMTI pour Ground Moving Target Indicator selon la terminologie anglo saxonne) le radar est en balayage continu sur le sol ainsi ; ainsi la veille aérienne ne peut pas être assurée et les poursuites sont interrompues ce qui peut remettre en cause une mission notamment si un seul porteur est employé pour la réaliser. La même problématique se pose dans le cas d'une prise d'images SAR (Synthetic Aperture Radar ou radar à ouverture synthétique en français).

Dans le cas de l'imagerie SAR, le temps d'illumination et de formation de l'image peut durer typiquement de une à plusieurs dizaines de secondes, voire une minute en fonction de la résolution souhaitée sur l'image, de la distance de prise de vue, de l'angle de visée au sol, de la vitesse de déplacement du porteur. A titre d'exemple, si on souhaite une résolution de 30cm à une distance de 60km, la résolution angulaire requise est de 5µrad. Avec un porteur se déplaçant à une vitesse de 240m/s et visant le sol avec un angle de 45°, le temps d'illumination pour une longueur d'onde de 3cm est alors d'environ 18s.

L'interruption des poursuites aériennes pendant plusieurs dizaines de secondes, voire pendant plus d'une minute, peut être problématique. Malgré cette interruption, les paramètres d'état des cibles pourraient être extrapolés de manière à réacquérir rapidement les cibles à l'issue du temps alloué au SAR, en supposant qu'elles se déplacent en ligne droite. Pour des cibles manoeuvrantes les extrapolations donneront en général des résultats ne permettant pas de reprendre les poursuites après une interruption aussi longue.

D'autre part, la situation tactique peut évoluer avec de nouvelles cibles qui ne sont pas détectées puisqu'en plus des poursuites en cours, la veille est également interrompue pendant la prise de vue SAR ce qui peut constituer un handicap important pendant la mission.

Les techniques d'émission colorée associées à un réseau d'antennes à multiples accès en entrée/sortie (ou MIMO pour Multiple Input Multiple Output) sont des techniques pouvant permettre de réaliser plusieurs fonctions radars simultanément. Les principes de l'émission colorée sont notamment décrits dans un article de François Le Chevalier : " Space-time transmission and coding for airborne radars " publié dans Radar Science and Technology, volume 6, décembre 2008. Ces radars à émission colorée permettent l'utilisation de nouvelles techniques de formation de faisceaux et de nouvelles formes d'onde, où différents signaux sont émis simultanément dans différentes directions pour coder conjointement l'espace et le temps. Ces signaux sont ensuite traités de manière cohérente à la réception. Ces nouvelles techniques permettent d'optimiser les performances globales du radar pour une mission donnée, tout en étant plus robustes aux contre-mesures électromagnétiques. Ces techniques permettent, entre autres, d'augmenter la couverture angulaire instantanée d'un radar en échange, par exemple, d'une bande radar plus importante ou d'ambiguïtés radar plus nombreuses. Ces techniques utilisent une généralisation des antennes à sous-réseaux car elles font usage, en plus des voies de réception, de plusieurs voies d'émission co-localisées.

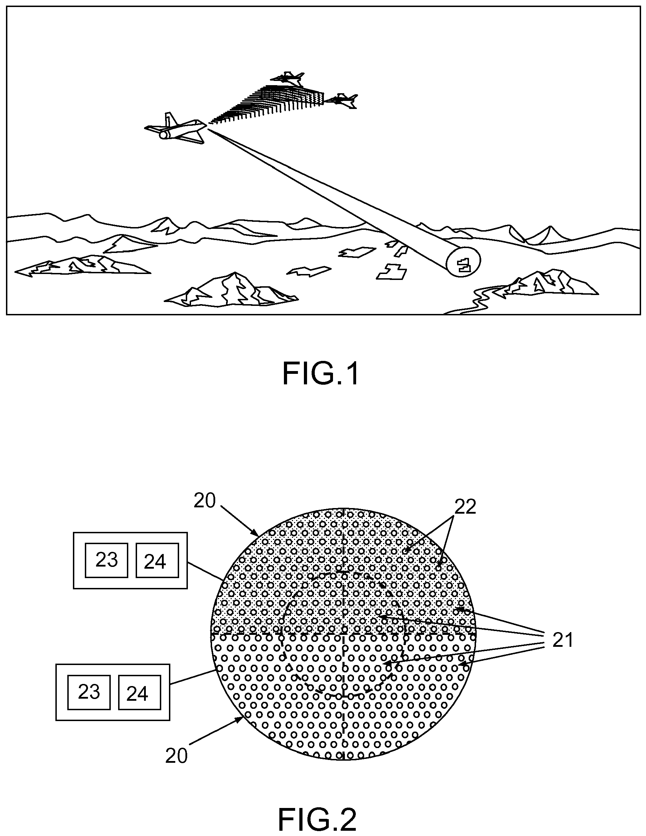

Dans un contexte aéroporté, le nombre de sous-réseaux restera nécessairement limité à l'ordre de la dizaine, pour des raisons de coût et d'encombrement. L'élargissement maximal de la couverture angulaire instantanée restera donc limité à un facteur $\sqrt{10} \approx 3$ dans les deux directions verticales et horizontales, soit environ 10° pour les longueurs d'onde et tailles d'antennes usuelles. Or, dans le cas de l'imagerie SAR par exemple, il est obligatoire d'éclairer le sol avec un angle de plusieurs dizaines de degrés, cet angle pouvant être constant pendant le temps d'éclairement (cas du mode «*StripMap*») ou bien asservi de manière à éclairer une zone fixe au sol (cas du mode «*SpotSar*»). En référence à la figure 1, le domaine angulaire aérien à couvrir est d'environ 120° dans le plan horizontal et jusqu'à 15° en site (soit 0,55 sr). Par conséquent l'élargissement de la couverture angulaire n'est pas suffisant pour éclairer l'union des domaines associés aux fonctions air-air et air-sol.

De plus les différentes variantes des techniques d'émission colorée imposent d'utiliser des formes d'onde à intervalles de répétition des impulsions communs aux voies d'émission ce qui nécessite de revoir la conception et le développement des modes actuels.

Un autre inconvénient réside dans le fait que le réseau d'émission couvre simultanément un grand domaine en élévation. Ceci implique d'alimenter chacune des sources du réseau d'émission avec un signal codé, les codes devant être tous orthogonaux entre eux. L'électronique nécessaire et le traitement associé sont donc complexes, et ceci d'autant plus que la dimension du réseau est importante.

Il est connu dans l'art antérieur notamment dans une publication de J.-L. Milin et al. «AMSAR - A European Success Story in AESA Radar», Proc. International Radar Conference, Oct. 2009 un radar multifonction. Dans ce dispositif, l'antenne est structurée en sous-réseaux constitués d'un sous-ensemble des éléments rayonnants répartis sur la surface totale de l'antenne. L'antenne émet par une voie somme et les sous-réseaux en réception permettent d'appliquer des traitements spatio-temporels afin de réduire la gêne occasionnée par les échos parasites de sol.

Un inconvénient de cette structure est qu'elle ne possède qu'une seule voie d'émission, elle ne permet donc pas d'émettre simultanément plusieurs formes d'ondes différentes.

Un moyen pour assurer une veille arienne pendant la réalisation d'une fonction «sol» (GMTI ou SAR) consiste à entrelacer les deux fonctions «air» et «sol». Cette technique est connue sous le terme anglo saxon «interleaved scanning» ou émission colorée en temps long. Dans ce type d'émission, les impulsions sont émises successivement dans différentes directions, éventuellement avec un codage additionnel en phase ou en fréquence par impulsion.

Ce concept d'émission permet certes une plus grande couverture angulaire quasi-instantanée ; cependant il introduit des ambiguïtés supplémentaires en vitesse dans chaque direction explorée.

De plus, appliqué au problème de la réalisation simultanée de fonctions «air» et «sol» comme par exemple la détection de cibles ou l'imagerie SAR, l'interleaved scanning remet en cause les formes d'ondes qualifiées jusqu'aujourd'hui. En effet, les formes d'onde air/sol sont à basse fréquence de récurrence pour ne pas avoir d'ambiguïtés en distance ; or les fonctions air/air supportent mal ce type de formes d'onde en raison notamment des ambiguïtés en vitesse des cibles rapides. Il est donc nécessaire de doter les formes d'ondes de propriétés supplémentaires pour annuler ou réduire l'effet des ambiguïtés en vitesse.

L'utilisation du concept d'interleaved scanning pour réaliser simultanément plusieurs fonctions radar requiert donc des modifications importantes dans la structure des radars, avec requalification complète des formes d'onde. Ceci a pour conséquence une implantation à relativement long terme et un coût très élevé.

Un but de l'invention est notamment de corriger certains des inconvénients précités en proposant un procédé de détection de cibles aériennes et un radar multifonction associé.

A cet effet, l'invention a pour objet un procédé de détection de cibles aériennes, mis en oeuvre par un radar multifonction comportant une antenne subdivisée en au moins deux portions d'antenne, chaque portion d'antenne étant configurée pour effectuer l'émission et la réception d'un signal, le procédé étant caractérisé en ce que :

- chaque portion d'antenne du radar est configurée pour émettre des signaux sur des bandes de fréquence distinctes,

- lors des phases d'émission d'une portion d'antenne, la réception de chaque portion d'antenne du radar est coupée entrainant un signal de réception comportant des données manquantes,

- le radar est configuré pour effectuer simultanément au moins deux fonctions radar dont une fonction de détection de cibles aériennes,

et en ce que le procédé comporte, pour chaque porte distance :

- une étape de réception de signaux,

- une étape d'estimation, à partir des signaux reçus, d'une matrice d'autocorrélation spatio temporelle de façon à modéliser les échos parasites de sol,

- une étape de détection de cible à l'aide d'un test statistique en tenant compte des données manquantes dans les signaux de réception et de ladite matrice d'autocorrélation spatio temporelle.

Selon une variante de mise en oeuvre, l'étape de détection de cible est réalisée à l'aide d'un test de maximum de vraisemblance généralisé.

Selon une variante de mise en oeuvre, dans l'étape d'estimation de la matrice d'autocorrélation, les données manquantes sont remplacées par la moyenne des signaux effectivement reçus.

Selon une variante de mise en oeuvre, l'étape d'estimation de la matrice d'autocorrélation est réalisée à l'aide d'un algorithme d'estimation.

Selon une variante de mise en oeuvre, l'étape d'estimation de la matrice d'autocorrélation est réalisée à l'aide d'un algorithme espérance-maximisation.

Selon une variante de mise en oeuvre, l'étape d'estimation de la matrice d'autocorrélation comprend une étape de regroupement des données pour former des groupes de données ayant un motif de manque identique.

Selon une variante de mise en oeuvre, les moyennes par lesquelles les données manquantes ont été remplacées sont stockées en mémoire de façon à être réutilisées sans calcul.

Selon une variante de mise en oeuvre, la corrélation temporelle des échos de sol est prise en compte en utilisant une fenêtre temporelle glissante.

Selon une variante de mise en oeuvre, l'étape de détection de cible comprend une étape de regroupement des données selon leur motif de manques.

L'invention a également pour objet un radar multifonction configuré pour mettre en oeuvre le procédé de détection de cible précédemment décrit, ledit radar comprenant une antenne subdivisée en au moins deux portions, chaque portion d'antenne comprenant au moins un module d'émission et au moins un module de réception, chaque module d'émission étant configuré pour émettre des signaux d'émission sur des bandes de fréquence distinctes et chaque module de réception étant configuré pour interrompre la réception lorsqu'un module d'émission émet, le radar comprenant en outre au moins un module de traitement configuré pour mettre en oeuvre le procédé de détection précédemment décrit, ledit radar étant configuré pour effectuer simultanément au moins deux fonctions radar dont une fonction de détection de cibles aériennes.

Selon une variante de réalisation, au moins une portion d'antenne est divisé en plusieurs sous réseaux, le groupe d'au moins un module d'émission de la portion d'antenne étant configuré pour regrouper lesdits sous réseaux ensemble, lors de la phase d'émission, pour ne former qu'une seule voie d'émission.

Selon une variante de réalisation, le radar est un radar aéroporté.

D'autres particularités et avantages de la présente invention apparaîtront plus clairement à la lecture de la description ci-après, donnée à titre illustratif et non limitatif, et faite en référence aux dessins annexés, dans lesquels :

- La figure 1 représente un exemple de couvertures angulaires dans les fonctions air/air et air/sol ;
- La figure 2 représente un exemple de mode de réalisation de l'antenne d'un radar multifonction suivant l'invention ;
- La figure 3 représente un exemple de diagramme temporel de phases d'émission et réception d'un radar multifonction selon l'invention ;
- La figure 4 représente un exemple de représentation graphique de l'amplitude de spectres de signaux reçus dans une voie somme, avec et sans manques à la réception ;
- Les figures 5a et 5b représentent des schémas de manque avec une fenêtre glissante illustrant une itération de l'algorithme E-M ;
- La figure 6 représente un exemple de réagencement de groupes de données spatio- temporelles suivant leur motif de manque ;
- La figure 7 représente les étapes possibles d'une itération pour estimer la matrice d'auto-corrélation ;
- Les figure 8 et 9 illustrent des variantes de mise en oeuvre du procédé selon l'invention ;
- La figure 10 représente une illustration de résultats obtenus par le procédé selon l'invention.

La figure 2 représente un exemple de mode de réalisation de l'antenne d'un radar multifonction suivant l'invention. Dans cet exemple l'antenne radar est partagée en deux parties ou portions d'antenne 20 indépendantes chacune dédiée à une fonction radar. Bien entendu cet exemple n'est nullement limitatif et peut être étendu à une subdivision de l'antenne radar en un nombre plus important de portion 20.

Suivant un exemple de réalisation le radar peut être un radar aéroporté, une portion d'antenne étant dédiée à une fonction radar air/sol et l'autre portion à une fonction air/air.

Chaque portion d'antenne 20 comprend au moins une voie d'émission et au moins une voie de réception. Chaque voie comprend différents sous réseaux d'antennes.

Chaque portion d'antenne 20 comprend au moins un module d'émission 23 et au moins un module de réception 24 configuré pour piloter respectivement les sous réseaux 21 des voies d'émission et de réception.

Suivant un mode de réalisation, au moins une portion d'antenne 20 peut être divisée en plusieurs sous réseaux 21, un sous réseau 21 étant formé d'un sous-ensemble des éléments rayonnants 22 répartis sur la surface totale de l'antenne du radar.

Suivant un mode de réalisation, lors de la phase d'émission radar, le ou les modules d'émission 23 d'une portion d'antenne 20 peuvent réunir les différents sous réseaux 21 pour ne former qu'une voie d'émission afin de focaliser au maximum le faisceau d'émission pour le balayage radar. Pour cela, le ou les modules d'émission 23 de la portion d'antenne 20 est configuré pour regrouper les sous réseaux 21 ensemble, pour ne former qu'une seule voie d'émission.

Un avantage du partage de l'antenne en plusieurs portions d'antenne 20 indépendantes est qu'il permet d'utiliser les formes d'onde radar qui sont actuellement employées pour chaque fonction radar sans être contraint de modifier la fréquence de récurrence et/ou la durée des impulsions émises pour l'une ou l'autre des fonctions. Cependant ce partage de l'antenne entraine deux contraintes :

Pour que les échos d'une forme d'onde d'une partie du radar ne se mélangent pas aux échos des autres, il est nécessaire d'isoler chacune des contributions. Une manière d'y parvenir peut consister à faire fonctionner les portions d'antenne en émission et réception dans des sous-bandes de fréquence bien séparées et filtrées à la réception. A cet effet, les modules d'émission 23 de chaque portion d'antenne sont configurés pour émettre des signaux sur des bandes de fréquences distinctes et bien séparées. Ceci peut être interprété comme un codage " espace-fréquence ". Suivant la position de zone d'émission (codage «espace») une fréquence différente est utilisée (codage «fréquence»). A la réception, le tri des signaux est effectué en fonction de la fréquence porteuse des signaux reçus.

Une seconde contrainte se situe au niveau de la réception. Bien que les portions d'antenne fonctionnent dans des sous-bandes distinctes, il n'est pas possible d'émettre et de recevoir simultanément avec la même antenne en raison des couplages existant entre les éléments rayonnants. Ainsi, quand une portion d'antenne émet un signal, la réception des autres portions d'antenne doit être coupée. Les modules de réception 24 de chaque portion d'antenne sont donc configurés pour interrompre la réception lorsqu'au moins une portion d'antenne émet un signal. Les fonctions radar deviennent donc lacunaires à la réception, c'est à dire que le signal reçu par chaque portion d'antenne présente des données manquantes. Cette seconde contrainte nécessite donc de modifier le traitement du signal à la réception pour tenir compte des manques.

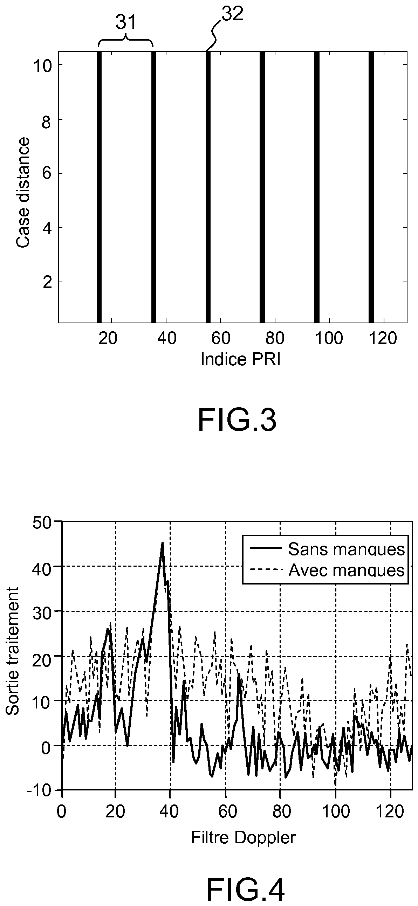

A titre illustratif, la figure 3 présente un exemple de diagramme temporel de phases d'émission et de réception d'un radar permettant simultanément une fonction air/sol et une fonction air/air. Dans cet exemple, la forme d'onde de poursuite aérienne, pour la fonction air/air, comprend 128 impulsions émises à Moyenne Fréquence de Récurrence (MFR), fixée à 40 kHz. Le facteur de forme est de 10% soit une durée d'impulsion de 2,5 µs. La forme d'onde d'indication de cibles mobiles au sol (ou GMTI pour Ground Moving Target Indicator selon la terminologie anglo saxonne), pour la fonction air/sol, est du type Basse Fréquence de Récurrence (BFR), fixée à 2 kHz. Le facteur de forme est aussi supposé égal à 10% ce qui correspond à des impulsions de durée 50 µs. La forme d'onde air/air est supposée débuter après 3 longueurs d'impulsion de la forme d'onde air/sol.

Sur cette figure, chaque colonne représente l'un des 128 intervalles de répétition des impulsions (ou PRI pour Pulse Repetition Interval) de la forme d'onde de la fonction air/air, et contient dix cases distance correspondant aux dix longueurs d'impulsion dans chaque PRI. Une case distance est représentée noircie quand la réception est coupée à cause de l'émission d'une impulsion de la forme d'onde air/sol. Dans une porte distance donnée on se trouve ainsi devant une alternance régulière de deux impulsions manquantes 32 et vingt impulsions disponibles 31, en raison du choix particulier des longueurs d'impulsions et des PRI des deux formes d'onde employées.

Pour un écho ponctuel, les manques à la réception sont à l'origine de nombreux lobes secondaires dans le domaine fréquentiel quand on applique un traitement classique d'analyse Doppler avec les données disponibles.

Pour un continuum d'échos puissants reçus par le sol, l'ensemble des lobes secondaires créés par les manques à la réception peut masquer la présence de toute cible éventuelle.

La figure 4 représente un exemple de représentation graphique de l'amplitude de spectres de signaux reçus dans une voie somme, avec et sans manques à la réception.

Dans cet exemple, on suppose qu'on est dans le cas d'un radar aéroporté et que le porteur se déplace à une altitude 10.000 pieds et à une vitesse de 240 m/s. Le radar pointe à 45° en gisement et 0° en site et sa bande passante est de 4 MHz ce qui correspond à 10 portes distance par durée d'impulsion et 100 portes distance par récurrence. On suppose que dans la porte distance n°90 se trouve une cible de vitesse égale à la moitié de la vitesse ambiguë et de rapport signal à bruit (ou SNR pour Signal to Noise Ratio selon la terminologie anglo saxonne) égal à 15 dB.

On observe que du fait de la grande dynamique des échos parasites de sol et des manques à la réception, des pics parasites de signal à bruit supérieurs à 20 dB dans presque toute la bande d'analyse sont générés. Ceci a pour conséquence de déclencher de nombreuses fausses alarmes alors que la cible n'est pas détectée.

Afin de prendre en compte les manques à la réception dans le traitement du signal et de réduire la gêne occasionnée par ceux-ci, le radar multifonction peut comprendre au moins un module de traitement programmé pour mettre en oeuvre le procédé de détection de cibles aériennes selon l'invention.

On considère une portion d'antenne 20 comprenant plusieurs sous réseaux 21 et on se place dans une porte distance donnée. Soit $X_n$ le signal reçu à la récurrence n. Ce signal peut s'écrire sous la forme:

$$X_n = \alpha G \ \textcolor{blue}{\zeta} \ \blacksquare e^{j2\pi n \nu T_r}$$
$$+ V_n \quad \text{avec } n \in [0, N\text{-}1] \tag{1}$$

où $X_n$ est un vecteur de taille égale au nombre de sous réseau 21 de réception, N est le nombre total d'impulsions, $\alpha$ représente l'amplitude complexe (inconnue) de la cible, G est le vecteur des gains complexes des sous-réseaux de l'antenne dans la direction de la cible, $\nu$ représente la fréquence Doppler associée à la cible et $T_r$ est la période de récurrence des impulsions.

$V_n$ est un vecteur représentant le signal des échos de sol reçu pour cette hypothèse distance ainsi que le bruit thermique. $V_n$ est supposé Gaussien, centré, et stationnaire. On note $Q_0$ sa matrice d'auto-corrélation.

La modélisation des échos parasites de sol comprend la corrélation temporelle d'impulsion à impulsion des retours de sol, supposés stationnaires ainsi que la corrélation spatiale d'un échantillon à l'autre entre deux voies de réception.

On note $Q_\delta$ la matrice de corrélation entre $V_n$ et $V_{n+\delta}$. La matrice $Q_\delta$ ne dépend pas de l'indice temporel n.

Si on désigne par P le nombre de sous réseaux 21 de la portion d'antenne 20 considérée, les vecteurs $X_n$, G et $V_n$ sont de taille P et les matrices $Q_0$ et $Q_\delta$ sont de taille PxP.

Pour prendre en compte la corrélation temporelle des échos de sol, on considère un horizon temporel glissant de L récurrences au delà duquel on néglige la corrélation des retours de sol. Généralement L est un entier très petit devant N. Classiquement, L est de l'ordre de la dizaine voire moins alors que N est de l'ordre de la centaine voire plus. Les données spatio-temporelles $Y_n$ dans cet horizon sont constituées des vecteurs $(X_n,...,X_{n+L-1})$ concaténés en un seul vecteur de taille PL :

$$Y_n = [X^*_n , ... , X^*_{n+L-1}]^*$$

avec $n\in[0,N-L]$ (2)

Le signe * désignant la transposition et conjugaison d'un vecteur ou une matrice complexe.

On définit de même le vecteur de pointage spatio-temporel, C, et la matrice d'auto-corrélation spatio-temporelle associée au fouillis, Q, avec une notation par blocs :

$$C = [G, (Ge^{j2\pi vT_r})^*, ... , (Ge^{j2\pi(L-1)vT_r})^*]^*$$ , (3)

et

$$Q = \begin{bmatrix} Q_0 & Q_1 & \cdots & Q_{L-1} \\ Q_1^* & Q_0 & \cdots & \cdots \\ \cdots & \cdots & \cdots & Q_1 \\ Q_{L-1}^* & \cdots & Q_1^* & Q_0 \end{bmatrix}.$$ (4)

La matrice Q est de taille LPxLP

Avec une fenêtre glissante de taille L, les vecteurs spatio-temporels $Y_n$ sont au nombre de (N-L+1). Quand des données sont manquantes à certains instants, les vecteurs $Y_n$ ne sont composés que des $L_n \le L$ mesures spatiales disponibles dans la fenêtre $(X_n,...,X_{n+L-1})$ :

$$Y_n = \alpha C_n e^{i2\pi n vT_r} + W_n \quad , \quad n = 0...\text{N-L} ,$$ (5)

où $C_n$ est le vecteur obtenu en supprimant les éléments de C correspondant aux indices des manques dans la fenêtre, et où $W_n$ est Gaussien, centré, de matrice d'auto-corrélation $\tilde{Q}_n$ obtenue en supprimant les lignes et les colonnes correspondantes. Les tailles de $C_n$ et $\tilde{Q}_n$ sont respectivement $PL_n$ et $PL_n \times PL_n$ ; Comme $\tilde{Q}_n$ dépend de l'indice temporel n, on se trouve dans une situation non stationnaire.

En faisant l'approximation supplémentaire que les données $Y_n$ sont indépendantes deux à deux, la densité de probabilité des mesures $(Y_0,..., Y_{N-L})$ est le produit des densités marginales. Puis en substituant à $\alpha$ sa valeur qui maximise la densité de probabilité on obtient le test du maximum de vraisemblance généralisé (ou GLRT pour Generalized Likelihood Ratio Test) suivant :

$$T(p) = \frac{\left| \sum_{n=0}^{N-L} C_n^* \tilde{Q}_n^{-1} Y_n e^{-i2\pi \frac{np}{N}} \right|^2}{\sum_{n=0}^{N-L} C_n^* \tilde{Q}_n^{-1} C_n} \overset{>}{<} seuil \quad \text{avec } p\in[0,N-1]$$ (6)

Dans l'expression (6) l'indice p correspond à celui des filtres Doppler et le seuil à une valeur prédéfinie permettant de respecter une probabilité de fausse alarme donnée.

Il est à noter qu'en absence de manques, les vecteurs $C_n$ sont tous égaux à C et les matrices $\tilde{Q}_n$ sont toutes égales à Q. Dans ce cas de figure, le traitement se réduit à un traitement classique décrit notamment dans une publication de J. Ward, «Space-Time Adaptive Processing for Airborne Radars", M.I.T. Lincoln Laboratory Technical Report 1015, Dec. 1994.

En pratique la mise en oeuvre de l'expression (6) nécessite de connaitre la matrice d'auto-corrélation Q qui est inconnue. Un moyen préféré de mise en oeuvre du procédé selon l'invention consiste à substituer une estimation de Q à la vraie matrice dans le traitement. L'estimation de la matrice Q peut être faite à l'aide d'un test statistique comme par exemple un test de maximum de vraisemblance. L'estimation de la matrice Q au sens du maximum de vraisemblance peut être faite quand il n'y a pas de manques avec l'expression suivante :

$$\hat{Q} = \frac{1}{N-L+1} \sum_{n=0}^{N-L} Y_n Y_n^* \ , \qquad (7)$$

Les données d'estimation $Y_n$ peuvent être les données de la porte distance sous test, ou bien des données secondaires indépendantes ne contenant pas de signal cible.

Ces données peuvent, par exemple, être issues de portes distance adjacentes à la porte distance sous test ou issues de pointages radars précédents.

L'estimation des paramètres d'un modèle statistique avec des données incomplètes peut être réalisée d'une manière générale avec un algorithme d'estimation comme par exemple un algorithme «espérance-maximisation» également connu sous les initiales «EM». Cet algorithme itératif est une méthode paramétrique permettant de remplacer les données manquantes par des valeurs estimées, ce qui permet d'estimer les paramètres voulus puis de ré-estimer les données manquantes, puis ré-estimer les paramètres avec les nouvelles données extrapolées et ainsi de suite jusqu'à la convergence.

A chaque itération, l'algorithme opère deux étapes distinctes :

- Une étape «Espérance», ou étape E, consistant à estimer l'«information» manquante à partir des données disponibles et de la valeur des paramètres déterminée à l'itération précédente.

- Une étape " Maximisation ", ou étape M, consistant à maximiser la vraisemblance comme s'il n'y avait pas de données manquantes et à mettre à jour la valeur du ou des paramètre(s) pour la prochaine itération. L'estimation des paramètres du modèle par maximum de vraisemblance est rendue possible grâce à l'estimation de l'«information» inconnue effectuée à l'étape précédente,

L'algorithme garantit que la vraisemblance augmente à chaque itération, ce qui conduit donc à des estimateurs de plus en plus corrects.

Il est à noter que dans l'étape E, «l'information» manquante qui est estimée ne correspond pas aux données manquantes elles-mêmes mais plutôt à la log-vraisemblance des données complètes.

On suppose qu'il n'y a pas de signal cible dans les données d'estimation (utilisation de données secondaires centrées $Y_n$, avec $n \in [0, N-L]$, ou que le signal cible est très faible devant les retours de sol (utilisation des données de test supposées centrées $Y_n$, avec $n \in [0, N-L]$), pour estimer Q.

Les statistiques exhaustives du modèle sans manque sont classiquement données par les coefficients de $\hat{Q}$ dans l'expression (7) au facteur (N-L+1) près:

$$s_{j,k} = \sum_{n=0}^{N-L} y_{j,n} y_{k,n}^* \ \text{ avec j et } k \in [1, PL] \qquad (8)$$

Dans cette expression, $y_{j,n}$ et $y_{k,n}$ représentent respectivement la $j^{\text{ème}}$ composante du vecteur $Y_n$ et la $k^{\text{ème}}$ composante du vecteur $Y_n$ de l'expression (2).

A l'itération t, l'étape E de l'algorithme EM consiste à calculer l'espérance des statistiques exhaustives, conditionnée aux données disponibles $Y_n$, avec $n \in [0, N-L]$, dans le modèle avec manques de l'expression (5), et à l'estimée courante $\hat{Q}^{(t)}$ de la matrice Q. L'espérance étant un opérateur linéaire, on a la relation :

$$E\left[s_{j,k}\Big|\hat{Q}^{(t)},Y_0,...,Y_{N-L}\right] = \sum_{n=0}^{N-L} E\left[y_{j,n}y^*_{k,n}\Big|\hat{Q}^{(t)},Y_n\right] \qquad (9)$$

Dans l'expression (9), on est amené à calculer l'espérance de chaque terme $y_{j,n}y^*_{k,n}$. Ces espérances dépendent de la disponibilité ou non des données $y_{j,n}$ et $y^*_{k,n}$ ainsi que de leur moyenne et covariance conditionnelles :

$$E\left[y_{j,n}y^*_{k,n}\Big|\hat{Q}^{(t)},Y_n\right] = \begin{cases} y_{j,n}y^*_{k,n} & si \ y_{j,n} \ et \ y_{j,n} \ sont \ disponibles \\ y_{j,n}\mu^*_{k,n} & si \ y_{j,n} \ est \ disponible \ et \ y_{k,n} \ manque \\ \mu_{j,n}y^*_{k,n} & si \ y_{j,n} \ manque \ et \ y_{k,n} \ est \ disponible \\ \mu_{j,n}\mu^*_{k,n} + C_{j,k,n} & si \ y_{j,n} \ et \ y_{k,n} \ manquent \end{cases} \qquad (10)$$

avec

$$\mu_{j,n} = E\left[y_{j,n}\Big|\hat{Q}^{(t)},Y_n\right] \qquad (11)$$

et

$$C_{j,k,n} = \mathrm{cov}\left[y_{j,n}y^*_{k,n}\Big|\hat{Q}^{(t)},Y_n\right]. \qquad (12)$$

Les moyennes conditionnelles (11) et covariances conditionnelles (12) ont des expressions explicites liées à la régression linéaire des composantes manquantes sur les composantes disponibles. En effet, les vecteurs $Y_n$ étant des vecteurs Gaussiens et centrés, la densité de probabilité d'une composante ou d'un sous-ensemble de composantes de $Y_n$ conditionnée(s) aux autres composantes est encore une densité normale, dont la moyenne et la covariance sont explicites.

Par la suite, dans les vecteurs $Y_n$ on distinguera les composantes disponibles que l'on notera $Y_n^{(1)}$ des composantes manquantes que l'on notera $Y_n^{(0)}$. La densité du vecteur $Y_n^{(0)}$, conditionné à $Y_n^{(1)}$ et à l'estimée courante $\hat{Q}^{(t)}$, est normale, de moyenne $\mu_n$ et covariance $C_n$ données par :

$$\mu_n = \hat{Q}^{(t)}_{01}\hat{Q}^{(t)-1}_{11}Y_n^{(1)} \ , \ \text{et} \qquad (13)$$

$$C_n = \hat{Q}^{(t)}_{00} - \hat{Q}^{(t)}_{01}\hat{Q}^{(t)-1}_{11}\hat{Q}^{(t)}_{10} \ , \qquad (14)$$

où la matrice $\hat{Q}^{(t)}$ est partitionnée en $\left(\hat{Q}^{(t)}_{00}, \ \hat{Q}^{(t)}_{01}, \ \hat{Q}^{(t)}_{10}, \ \hat{Q}^{(t)}_{11}\right)$ relativement aux composantes manquantes et disponibles dans $Y_n$, identifiées respectivement par «0» et «1». Il est à noter que le partitionnement dépend également de l'indice n mais, afin ne pas alourdir les notations, cette référence n'est pas mentionnée. Plus exactement, le partitionnement dépend du motif de manque, pouvant éventuellement être commun à plusieurs indices n différents.

Dans les expressions (11) et (12), les quantités $\mu_{j,n}$ et $C_{j,k,n}$ correspondent respectivement à la j[ème] composante de $\mu_n$ dans l'expression (13) et le (j,k)[ème] coefficient de $C_n$ dans l'expression (14). Cela complète le calcul de l'expression (10) puis celui de l'expression (9) et termine l'étape E.

Contrairement aux méthodes classiques, pour l'étape E de l'algorithme, la méthode selon l'invention ne cherche pas à estimer ou extrapoler les données manquantes. De façon différente, elle remplace les données manquantes par leur moyenne. On peut remarquer que si on avait extrapolé les données manquantes (au lieu des statistiques exhaustives) avec leurs estimées par régression linéaire, on n'aurait pas eu les termes correctifs $C_{j,k,n}$ dans les expressions (10), (12) et (14).

L'étape M de l'algorithme consiste à estimer les paramètres du modèle par exemple par maximum de vraisemblance comme s'il n'y avait pas de données manquantes. Cette estimée est donnée par l'expression (7). Elle est donnée par les statistiques exhaustives, à un facteur $(N-L+1)^{-1}$ près. Par conséquent, l'étape M consiste à diviser la matrice des coefficients calculés avec l'expression (9) dans l'étape E, par (N-L+1). Le résultat fournit l'estimée $\hat{Q}^{(t+1)}$ qui est ensuite utilisée dans l'itération suivante. On peut montrer, notamment avec la publication de A. P. Dempster et al. "Maximum Likelihood from Incomplete Data via the EM Algorithm J.R. Stat. Soc., B, vol. 39, n°1, pp.1-38, 1977", que l'algorithme converge vers un maximum local de la log-vraisemblance.

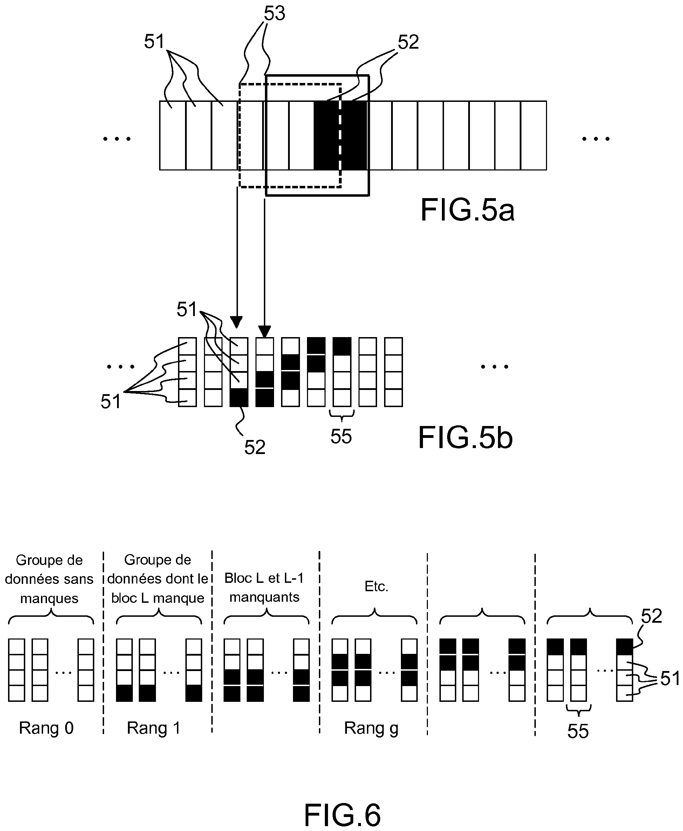

A titre d'illustration, on considère le schéma de manque des figures 5a et 5b avec une fenêtre temporelle 53 glissante. Cet exemple illustre une itération de l'algorithme E-M.

Sur la figure 5a, les vecteurs signaux $X_n$ sont représentés par des rectangles. Chaque rectangle (ou bloc) représente une donnée spatiale 51, 52 de taille égale au nombre de sous réseaux dans la portion d'antenne considérée. Les signaux effectivement reçus, ou données disponibles 51, sont représentés par des rectangles blancs et les données manquantes 52 sont représentées par des rectangles noirs. Comme précédemment (figure 3), on retrouve de façon périodique dans chaque porte distance, une alternance de données manquantes 52 pendant quelques instants temporels consécutifs et de données disponibles 51 pendant un plus grand nombre d'instants temporels consécutifs. Deux blocs consécutifs représentant les données manquantes 52 ont été représentés figure 5a, ils correspondent à la période pendant laquelle une sous portion 20 de l'antenne émet et donc pendant laquelle les sous réseaux 21 sont coupés en réception.

Dans cet exemple nullement limitatif, on considère une fenêtre temporelle glissante, ou horizon temporel 53 glissant, de quatre récurrences. On suppose que la fenêtre temporelle se déplace de la gauche vers la droite sur l'ensemble des itérations. Sur cette figure, l'horizon temporel 53 a été représenté à deux instants consécutifs particuliers.

Sur la figure 5b, les L=4 blocs représentant les données spatiales 51, 52 d'une fenêtre 53 sont rassemblés dans un groupe 55 de données spatio-temporelles de taille PL. Au fur et à mesure de l'avancement de la fenêtre temporelle 53, les composantes manquantes se propagent avec l'indice temporel depuis les dernières composantes vers les premières composantes du vecteur 55 comme illustré figure 5b.

La matrice d'auto-corrélation est estimée à l'aide des expressions (7) et (11) à (14) comme présenté précédemment.

Selon un mode de mise en oeuvre particulier, le procédé selon l'invention comporte une étape de regroupement des vecteurs 55 de données spatio-temporelles suivant leur schéma de manque, c'est-à-dire suivant l'emplacement de la ou des données manquantes 52.

La figure 6 représente un exemple de réagencement des groupes 55 de données spatio-temporelles de la figure 5b suivant leur motif ou schéma de manque. Les groupes de donnés 55 présentant un même motif de manque sont rassemblés ensemble. Ainsi, les groupes de donnés 55 sans manque sont rassemblés ensemble. Un autre rassemblement est formé des groupes de données 55 dont le dernier bloc, d'indice L, est manquant et ainsi de suite. A chaque ensemble de groupe de données 55 présentant un schéma de manque identique est affecté un rang g.

Cette étape de regroupement des données permet, de façon avantageuse, de réduire les temps de calcul en traitant les groupes de données 55 ayant un même motif de manque par lot.

Comme le rappelle la relation (9), l'estimée d'une somme étant égale à la somme des estimées et le résultat d'une somme ne dépendant pas de l'ordre dans lequel sont additionnés ses termes, l'idée est d'additionner les contributions successives des différents groupes de données 55, indexés par g, dont le motif de manques est le même. De cette manière le partitionnement et l'inversion de sous-matrices de $\hat{Q}^{(t)}$ est effectué une seule fois pour toutes les données concernées.

L'algorithme d'estimation consiste, pour chaque groupe de données, à extrapoler les données manquantes via l'estimée courante $\hat{Q}^{(t)}$ afin de calculer la contribution du groupe g à l'estimée $\hat{Q}^{(t+1)}$, tout en prenant en compte le terme correctif calculé lui aussi via l'estimée courante $\hat{Q}(t)$. Pour le groupe sans manque indexé par g=0 il n'y a pas d'extrapolation ni de terme correctif à calculer. Sa contribution au calcul de $\hat{Q}^{(t+1)}$ est donnée par l'estimateur empirique habituel (à un facteur près), qui peut être calculé une fois pour toute afin d'initialiser immédiatement $\hat{Q}^{(t+1)}$ à chaque itération t.

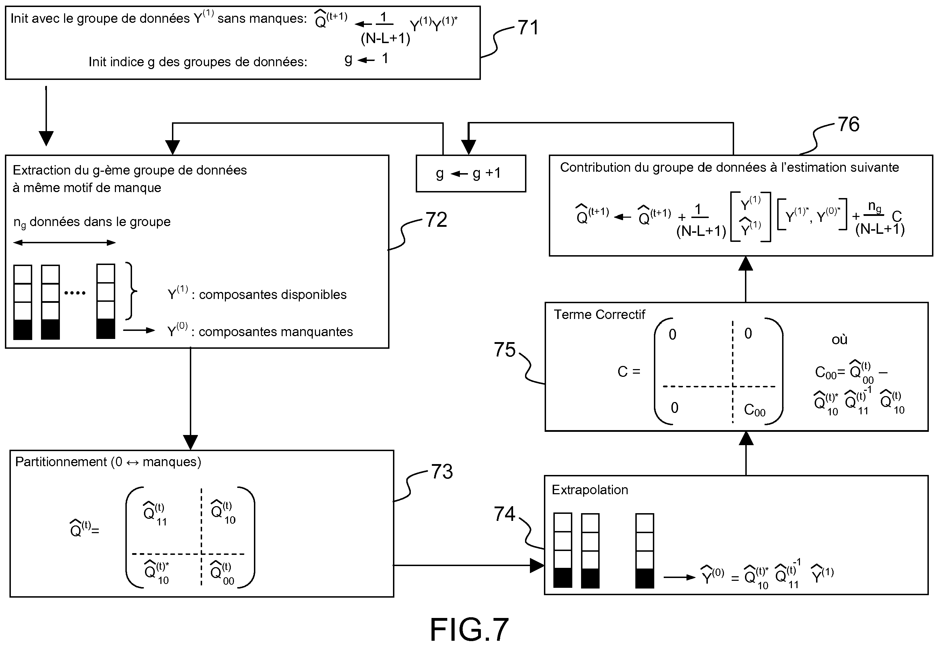

La figure 7 présente les étapes possibles d'une itération t pour estimer la matrice d'auto-corrélation Q. Pour des raisons de concision et afin de ne pas surcharger la figure, dans cet exemple, on a noté ng le nombre de données dans le groupe d'indice g, et N'=N-L+1 le nombre total de groupe de données spatio-temporelles 55.

A l'itération t, chaque groupe de données 55 avec un certain motif de manques contribue au calcul de $\hat{Q}^{(t+1)}$ par l'intermédiaire des expressions (10) à (14).

Une première étape d'initialisation 71 est effectuée avec les groupes de données 55 sans manque. L'estimation de la matrice Q à l'itération (t+1) est calculée à l'aide de l'expression (7) où la somme est restreinte aux données sans manques. L'indice g du rang des groupes de données 55 à traiter est initialisé à 1.

A l'étape suivante 72, les groupes de données 55 de rang g sont extraits. On considère le vecteur $Y^{(1)}$ composé des données disponibles 51 et le vecteur $Y^{(0)}$ composé des données manquantes 52.

Au cours d'une étape 73 de partitionnement, l'estimée courante $\hat{Q}^{(t)}$ de la matrice Q est partitionnée en $\left( \hat{Q}_{00}^{(t)}, \ \hat{Q}_{01}^{(t)}, \ \hat{Q}_{10}^{(t)}, \ \hat{Q}_{11}^{(t)} \right)$ relativement aux composantes manquantes et disponibles dans $Y_n$, identifiées respectivement par les indices «0» et «1».

La sous-matrice $\hat{Q}_{00}^{(t)}$ est extraite de $\hat{Q}^{(t)}$ en ne retenant que ses lignes et ses colonnes d'indices correspondant aux données manquantes. La sous-matrice $\hat{Q}_{01}^{(t)}$ est extraite de $\hat{Q}^{(t)}$ en ne retenant que ses lignes d'indices correspondant aux données manquantes et ses colonnes d'indices correspondant aux données disponibles. La sous-matrice $\hat{Q}_{10}^{(t)}$ est extraite de $\hat{Q}(t)$ en ne retenant que ses lignes d'indices correspondant aux données disponibles et ses colonnes d'indices correspondant aux données manquantes. La sous-matrice $\hat{Q}_{11}^{(t)}$ est extraite de $\hat{Q}(t)$ en ne retenant que ses lignes et ses colonnes d'indices correspondant aux données disponibles.

L'estimation de la matrice Q est calculée en fonction des vecteurs $Y^{(1)}$ de données disponibles 51 et les vecteurs $Y^{(0)}$ de données manquantes 52.

Le partitionnement 73 permet de remplacer les données manquantes par leur moyenne à l'étape 74 à l'aide de l'expression (13)et de calculer le terme correctif C à l'étape 75 à l'aide de l'expression (14).

Enfin, une étape 76 permet de calculer la contribution de l'ensemble de groupe de donnés 55 considéré à l'estimation de la matrice $\hat{Q}^{(t)}$.

L'indice du rang g est incrémenté de un de façon à prendre en compte l'ensemble des groupes de donnés 55 suivant et l'algorithme reboucle sur l'étape d'extraction 72. La boucle se termine lorsque tous les ensembles de groupe de données ont été pris en compte. Si on considère l'exemple de la figure 6, en plus du groupe de données sans manques on a 5 ensembles de groupes de données 55 présentant des motifs de manque identique. Dans ce cas, l'indice g de ces ensembles varie de 1 à 5.

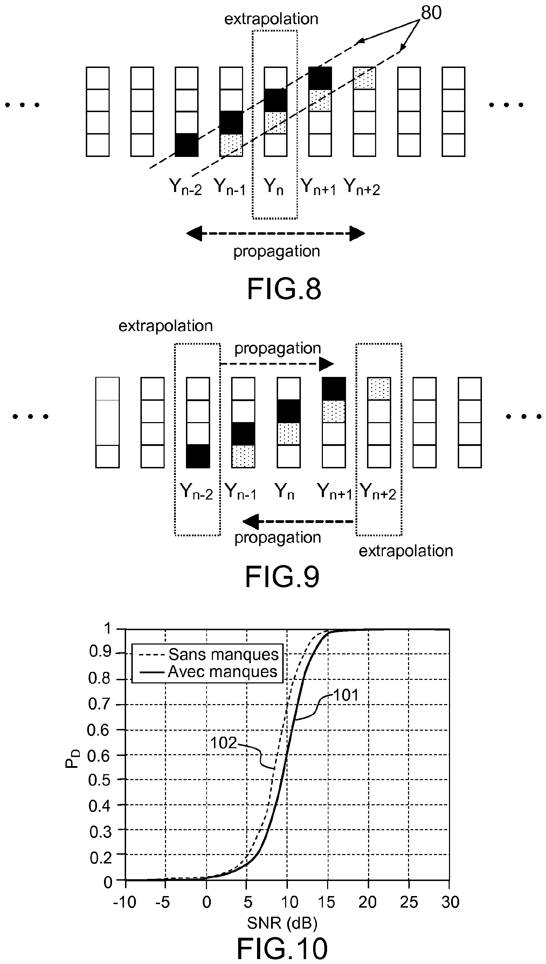

Les figures 8 et 9 illustrent des variantes de mise en oeuvre du procédé. Comme précédemment, on considère une fenêtre temporelle de longueur L=4. Bien entendu, cet exemple n'est nullement limitatif et peut être généralisé à une taille de fenêtre temporelle 53 quelconque.

Comme on utilise une fenêtre temporelle 53 glissante, il y a des valeurs qui se recopient au cours du déplacement de cette fenêtre 53. Une façon de réduire le temps de calcul peut consister à effectuer l'estimation des valeurs manquante 51 une seule fois et ensuite faire propager cette valeur estimée sur les " diagonales " 80.

Une première variante est présentée figure 8. Dans cet exemple le remplacement des données manquantes 52 par leur moyenne est effectuée sur un groupe de données 55 comportant les deux données manquantes 52. Ces valeurs de remplacement sont ensuite réutilisées sans calcul pour les groupes de données 55 voisins. Dans l'exemple de le figure 8, les deux données manquantes 52 sont remplacées sur le groupe de données 55 dont les composantes manquantes 52 sont situées au centre des vecteurs spatio-temporels $Y_n$ puis les valeurs de remplacement sont propagées aux groupes de données 55 voisins. La valeur d'une donnée manquante 52 est recopiée sur les groupes de données $Y_{n-2}$ à $Y_{n+1}$ et la valeur de la seconde sur les groupes de données $Y_{n-1}$ à $Y_{n+2}$.

Une fois les valeurs de remplacement calculées, ces dernières peuvent, par exemple, être stockées dans une zone mémoire pour pouvoir être rappelées et réutilisées sans calcul, réduisant ainsi le temps de traitement.

La figure 9 présente une autre variante de mise en oeuvre. Dans cette variante, les données manquantes 52 ne sont remplacées par leur moyenne que pour les groupes de données dont les données manquantes 52 sont situées en tête ou en queue des groupes de données spatio-temporelles 55 c'est-à-dire les groupes de données spatio-temporelles 55 ne contenant qu'une seule donnée manquante 52.

Dans l'exemple illustré, les données manquantes 52 sont remplacées uniquement pour un bloc du groupe de données $Y_{n-2}$ et un bloc du groupe de données $Y_{n+2}$. Les valeurs des moyennes sont ensuite propagées aux vecteurs voisins, ($Y_{n-1}$ à $Y_{n+1}$ pour une première donnée manquante et $Y_{n+1}$ à $Y_{n-1}$ pour la seconde donnée manquante.

Ce regroupement des données spatio-temporelles 55 peut également être utilisé de façon avantageuse pour le test du maximum de vraisemblance généralisé de l'expression (6). En effet, les sommes qui apparaissent au numérateur et au dénominateur du traitement peuvent être calculées efficacement en additionnant les contributions successives de chaque groupe de données manquantes, de manière similaire.

La figure 10 illustre un exemple de résultat obtenu en appliquant le procédé selon l'invention. Cette figure représente la probabilité de détection $P_D$ en fonction du rapport signal sur bruit (SNR) de la cible, en comparant les performances de détection dans les cas d'un signal de réception avec manques 101 par rapport aux performances obtenues dans le cas d'un signal sans manques 102.

Dans cet exemple, l'antenne utilisée est celle présentée figure 2. La portion d'antenne 20 utilisée comporte P=4 voies spatiales de réception et les principaux paramètres associés au porteur et au radar sont rassemblés dans le tableau suivant.

| Paramètres radar | |
|---|---|
| Nombre d'impulsions (N) | 128 |
| Fréquence de récurrence ($F_r$) | 40 kHz |
| Longueur d'onde ($\lambda$) | 3 cm |
| Puissance émise ($P_e$) | 5 kW |
| Bande passante (B) | 4 MHz |
| Facteur de forme (F) | 10% |
| | |
| Paramètres de vol | |
| Altitude (h) | 10.000 pieds |
| Vitesse (V) | 240 m/s |
| Angle visés dans le plan horizontal ($\alpha_g$) et vertical ($\alpha_s$) | 45° et 0° |

Le terrain considéré possède une réflectivité radar qui varie avec le sinus de l'angle d'incidence sur le sol. Le seuil de détection est réglé de manière à avoir une probabilité de fausse alarme de $5 \times 10^{-4}$.

Par rapport au cas sans manques, la méthode proposée présente une perte d'environ 1 dB, uniformément pour l'ensemble des probabilités de détection, incluant la perte de bilan énergétique due aux impulsions manquantes. Pour cet exemple, sur les 128 impulsions de la forme d'onde, 12 sont manquantes. La perte énergétique correspondante est 116/128 soit - 0,4 dB. Les pertes de la méthode proposée intrinsèquement dues aux manques sont par conséquent d'environ - 0,6 dB.

**Revendications**

1. Procédé de détection de cibles aériennes, mis en oeuvre par un radar multifonction comportant une antenne subdivisée en au moins deux portions d'antenne (20), chaque portion d'antenne (20) étant configurée pour effectuer l'émission et la réception d'un signal, le procédé étant **caractérisé en ce que** :

   - chaque portion d'antenne (20) du radar est configurée pour émettre des signaux sur des bandes de fréquence distinctes,
   - lors des phases d'émission d'une portion d'antenne (20), la réception de chaque portion d'antenne (20) du radar est coupée entrainant un signal de réception comportant des données manquantes (52),
   - le radar est configuré pour effectuer simultanément au moins deux fonctions radar dont une fonction de détection de cibles aériennes,

   et **en ce que** le procédé comporte, pour chaque porte distance :

   - une étape de réception de signaux,
   - une étape d'estimation, à partir des signaux reçus, d'une matrice d'autocorrélation spatio temporelle de façon à modéliser les échos parasites de sol,
   - une étape de détection de cible à l'aide d'un test statistique en tenant compte des données manquantes dans les signaux de réception et de ladite matrice d'autocorrélation spatio temporelle.

2. Procédé selon la revendication précédente selon lequel, l'étape de détection de cible est réalisée à l'aide d'un test de maximum de vraisemblance généralisé.

3. Procédé selon une des revendications précédentes selon lequel, dans l'étape d'estimation de la matrice d'autocorrélation, les données manquantes (52) sont remplacées par la moyenne des signaux effectivement reçus.

4. Procédé selon la revendication précédente dans lequel l'étape d'estimation de la matrice d'autocorrélation est réalisée à l'aide d'un algorithme d'estimation.

5. Procédé selon la revendication précédente dans lequel l'étape d'estimation de la matrice d'autocorrélation est réalisée à l'aide d'un algorithme espérance-maximisation.

6. Procédé selon une des revendications précédentes dans lequel l'étape d'estimation de la matrice d'autocorrélation comprend une étape de regroupement des données pour former des groupes de données (55) ayant un motif de manque identique.

7. Procédé selon une des revendications 3 à 6 dans lequel les moyennes par lesquelles les données manquantes (52) ont été remplacées sont stockées en mémoire de façon à être réutilisées sans calcul.

8. Procédé selon une des revendications précédentes dans lequel la corrélation temporelle des échos de sol est prise en compte en utilisant une fenêtre temporelle glissante.

9. Procédé selon une des revendications précédentes dans lequel l'étape de détection de cible comprend une étape de regroupement des données selon leur motif de manques.

10. Radar multifonction configuré pour mettre en oeuvre le procédé selon une des revendications précédentes **caractérisé en ce qu'**il comprend une antenne subdivisée en au moins deux portions (20), chaque portion d'antenne (20) comprenant au moins un module d'émission (23) et au moins un module de réception (24), chaque module d'émission (23) étant configuré pour émettre des signaux d'émission sur des bandes de fréquence distinctes et chaque module de réception (24) étant configuré pour interrompre la réception lorsqu'un module d'émission (23) émet, le radar comprenant en outre au moins un module de traitement configuré pour mettre en oeuvre le procédé selon une des revendications précédentes et **en ce que** ledit radar est configuré pour effectuer simultanément au moins deux fonctions radar dont une fonction de détection de cibles aériennes.

11. Radar selon la revendication précédente dans lequel au moins une portion d'antenne (20) est divisée en plusieurs sous réseaux (21), le groupe d'au moins un module d'émission (23) de la portion d'antenne (20) étant configuré pour regrouper lesdits sous réseaux (21) ensemble, lors de la phase d'émission, pour ne former qu'une seule voie d'émission.

12. Radar selon une des revendications 10 ou 11 dans lequel ledit radar est un radar aéroporté.

**Patentansprüche**

1. Verfahren zum Erkennen von Luftzielen, ausgeführt mit einem Multifunktionsradar, das eine Antenne umfasst, die in wenigstens zwei Antennenteile (20) unterteilt ist, wobei jeder Antennenteil (20) zum Bewirken des Sendens und des Empfangens eines Signals konfiguriert ist, wobei das Verfahren **dadurch gekennzeichnet ist, dass**:

- jeder Antennenteil (20) des Radars zum Senden von Signalen auf verschiedenen Frequenzbändern konfiguriert ist,
- in den Sendephasen eines Antennenteils (20) der Empfang jedes Antennenteils (20) des Radars unterbrochen wird, so dass sich ein Empfangssignal ergibt, das fehlende Daten (52) umfasst,
- das Radar zum gleichzeitigen Bewirken von wenigstens zwei Radarfunktionen konfiguriert ist, darunter eine Luftzielerkennungsfunktion,

und dadurch, dass das Verfahren für jedes Reichweitentor Folgendes beinhaltet:

- einen Schritt des Empfangens von Signalen,
- einen Schritt des Schätzens, auf der Basis der empfangenen Signale, einer räumlich-zeitlichen Autokorrelationsmatrix, um die parasitären Bodenechos zu modellisieren,
- einen Schritt der Zielerkennung mit Hilfe einer statistischen Prüfung unter Berücksichtigung von fehlenden Daten in den Empfangssignalen und der räumlich-zeitlichen Autokorrelationsmatrix.

2. Verfahren nach dem vorherigen Anspruch, bei dem der Zielerkennungsschritt mit Hilfe einer generalisierten Maximum-Likelihood-Prüfung realisiert wird.

3. Verfahren nach einem der vorherigen Ansprüche, bei dem in dem Schritt des Schätzens der Autokorrelationsmatrix die fehlenden Daten (52) durch das Mittel der wirksam empfangenen Signale ersetzt werden.

4. Verfahren nach dem vorherigen Anspruch, bei dem der Schritt des Schätzens der Autokorrelationsmatrix mit Hilfe eines Schätzalgorithmus realisiert wird.

5. Verfahren nach dem vorherigen Anspruch, bei dem der Schritt des Schätzens der Autokorrelationsmatrix mit Hilfe eines Expectation-Maximisation-Algorithmus realisiert wird.

6. Verfahren nach einem der vorherigen Ansprüche, bei dem der Schritt des Schätzens der Autokorrelationsmatrix einen Schritt des Gruppierens von Daten zum Bilden von Datengruppen (55) mit einem identischen Fehlmotiv beinhaltet.

7. Verfahren nach einem der Ansprüche 3 bis 6, bei dem die Mittel, mit denen die fehlenden Daten (52) ersetzt wurden, im Speicher zur Wiederverwendung ohne Berechnung gespeichert werden.

8. Verfahren nach einem der vorherigen Ansprüche, bei dem die zeitliche Korrelation von Bodenechos mittels eines gleitenden Zeitfensters berücksichtigt wird.

9. Verfahren nach einem der vorherigen Ansprüche, bei dem der Zielerkennungsschritt einen Schritt des Umgruppierens von Daten gemäß ihrem Fehlmotiv beinhaltet.

10. Multifunktionsradar, konfiguriert zum Ausführen des Verfahrens nach einem der vorherigen Ansprüche, **dadurch gekennzeichnet, dass** es eine Antenne umfasst, die in wenigstens zwei Teile (20) unterteilt ist, wobei jeder Antennenteil (20) wenigstens ein Sendemodul (23) und wenigstens ein Empfangsmodul (24) umfasst, wobei jedes Sendemodul (23) zum Senden von Sendesignalen auf verschiedenen Frequenzbändern konfiguriert ist und jedes Empfangsmodul (24) zum Unterbrechen des Empfangs konfiguriert ist, wenn ein Sendemodul (23) sendet, wobei das Radar ferner wenigstens ein Verarbeitungsmodul umfasst, konfiguriert zum Ausführen des Verfahrens nach einem der vorherigen Ansprüche, und dadurch, dass das Radar zum gleichzeitigen Bewirken von wenigstens zwei Radarfunktionen konfiguriert ist, darunter eine Luftzielerkennungsfunktion.

11. Radar nach dem vorherigen Anspruch, bei dem wenigstens ein Antennenteil (20) in mehrere Subanordnungen (21) unterteilt ist, wobei die Gruppe aus wenigstens einem Sendemodul (23) des Antennenteils (20) zum Umgruppieren der Subanordnungen (21) miteinander in der Sendephase konfiguriert ist, um einen einzigen Sendekanal zu bilden.

12. Radar nach Anspruch 10 oder 11, wobei das Radar ein Luftradar ist.

**Claims**

1. A method for detecting aerial targets, implemented by a multifunction radar comprising an antenna subdivided into at least two antenna portions (20), each antenna portion (20) being configured to perform the transmission and the reception of a signal, the method being **characterized in that**:

   - each antenna portion (20) of the radar is configured to transmit signals on distinct frequency bands,
   - during the transmission phases of an antenna portion (20), the reception of each antenna portion (20) of the radar is cut resulting in a reception signal comprising missing data (52),
   - the radar is configured to simultaneously perform at least two radar functions including an aerial target detection function,

   and **in that** the method comprises, for each range gate:

   - a step of reception of signals,
   - a step of estimation, from the signals received, of a space-time autocorrelation matrix so as to model the spurious ground echoes,
   - a step of target detection using a statistical test by taking into account missing data in the reception signals and said space-time autocorrelation matrix.

2. The method as claimed in the preceding claim, in which the step of target detection is performed using a test of generalized maximum likelihood.

3. The method as claimed in one of the preceding claims, in which, in the step of estimation of the autocorrelation matrix, the missing data (52) are replaced by the average of the signals effectively received.

4. The method as claimed in the preceding claim, in which the step of estimation of the autocorrelation matrix is performed using an estimation algorithm.

5. The method as claimed in the preceding claim, in which the step of estimation of the autocorrelation matrix is performed using an expectation-maximization algorithm.

6. The method as claimed in one of the preceding claims, in which the step of estimation of the autocorrelation matrix comprises a step of grouping of the data to form groups of data (55) having an identical pattern of omission.

7. The method as claimed in one of claims 3 to 6, in which the averages by which the missing data (52) have been replaced are stored in memory so as to be re-used without computation.

8. The method as claimed in one of the preceding claims, in which the time correlation of the ground echoes is taken into account by using a sliding time window.

9. The method as claimed in one of the preceding claims, in which the step of target detection comprises a step of grouping of the data according to their pattern of omissions.

10. A multifunction radar configured to implement the method as claimed in one of the preceding claims, **characterized in that** it comprises an antenna subdivided into at least two portions (20), each antenna portion (20) comprising at least one transmission module (23) and at least one reception module (24), each transmission module (23) being configured to transmit transmission signals on distinct frequency bands and each reception module (24) being configured to interrupt the reception when a transmission module (23) transmits, the radar further comprising at least one processing module configured to implement the method as claimed in one of the preceding claims and **in that** said radar is configured to simultaneously perform at least two radar functions, including an aerial target detection function.

11. The radar as claimed in the preceding claim, in which at least one antenna portion (20) is divided into a number of subarrays (21), the group of at least one transmission module (23) of the antenna portion (20) being configured to group said subarrays (21) together, during the transmission phase, so as to form just a single transmission channel.

12. The radar as claimed in one of claims 10 or 11, in which said radar is an airborne radar.

FIG.1

FIG.2

FIG.3

FIG.4

FIG.5a

FIG.5b

55

| Groupe de données sans manques | Groupe de données dont le bloc L manque | Bloc L et L-1 manquants | Etc. | | |
|---|---|---|---|---|---|
| Rang 0 | Rang 1 | | Rang g | | 55 |

FIG.6

FIG.7

extrapolation

80

$Y_{n-2}$ $Y_{n-1}$ $Y_n$ $Y_{n+1}$ $Y_{n+2}$

propagation

## FIG.8

extrapolation

propagation

$Y_{n-2}$ $Y_{n-1}$ $Y_n$ $Y_{n+1}$ $Y_{n+2}$

propagation

extrapolation

## FIG.9

- - - Sans manques
— Avec manques

101

102

$P_D$

SNR (dB)

## FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- *Radar Science and Technology,* Décembre 2008, vol. 6
- **J.-L. MILIN et al.** AMSAR - A European Success Story in AESA Radar. *Proc. International Radar Conference,* Octobre 2009
- **J. WARD.** Space-Time Adaptive Processing for Airborne Radars. *M.I.T. Lincoln Laboratory Technical Report 1015,* Décembre 1994
- **A. P. DEMPSTER et al.** Maximum Likelihood from Incomplete Data via the EM Algorithm. *J.R. Stat. Soc.,* 1977, vol. 39 (1), 1-38